(19) Europäisches Patentamt / European Patent Office / Office européen des brevets

(11) **EP 2 836 004 A1**

(12) **EUROPEAN PATENT APPLICATION**

(43) Date of publication:
**11.02.2015 Bulletin 2015/07**

(21) Application number: **13306132.5**

(22) Date of filing: **07.08.2013**

(51) Int Cl.:
**H04W 24/10** (2009.01)     **H04W 48/06** (2009.01)
**H04W 84/04** (2009.01)     **H04W 84/06** (2009.01)
**H04W 88/08** (2009.01)     **H04W 88/12** (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Wong, Shin Horng
  Swindon, Wiltshire SN5 7DJ (GB)**
• **Puddle, Nicola
  Swindon, Wiltshire SN5 7DJ (GB)**

• **Brend, Graham
  Swindon, Wiltshire SN5 7DJ (GB)**

(74) Representative: **Leppard, Andrew John et al
Script IP Limited
Turnpike House
18 Bridge Street
Frome
Somerset BA11 1BB (GB)**

Remarks:
Amended claims in accordance with Rule 137(2) EPC.

(54)     **Methods and apparatuses for determining a policy for reporting a cell performance indicator**

(57)     Network node methods, computer program products and network nodes are disclosed. A network node method comprises: determining a policy for reporting of a cell performance indicator by at least one small cell base station, the cell performance indicator being utilised for adjusting a cell bias associated with a small cell supported by that small cell base station; and transmitting the policy to the at least one small cell base station to be utilised during the reporting of a cell performance indicator. In this way, rather than always transmitting the cell performance indicator to the network node, the network node can control the circumstances under which the cell performance indicator is transmitted to ensure that it is only transmitted when necessary. This can help the network node to control the amount of cell performance indicators received to a manageable level.

FIG. 11

EP 2 836 004 A1

**Description**

FIELD OF THE INVENTION

The present invention relates to network node methods, computer program products and network nodes.

BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells within the macro cell. Such smaller sized cells are sometimes referred to as micro cells, femto cells and pico cells. A wireless telecommunications network comprised of different sized cells is known as a heterogeneous wireless telecommunications network. One way to establish such a small cell is to provide a small cell base station, such as a home cell or femto base station that provides coverage, having a relatively limited range, typically within the coverage area of a larger cell. The transmission power of a small cell base station is relatively low and, hence, each small cell provides a small coverage area compared with that of a macro cell and covers, for example, an office or a home.

Small cell base stations are typically intended to provide support for users belonging to a particular home or office. Accordingly, small cell base stations may be private access or may be public access. In a small cell base station that provides private access, access is registered only to registered users, for example family members or particular groups of employees. In small base stations which are public access, other users may use the small cell base station, typically subject to certain restrictions to protect the quality of service received by preferred users.

Such small cells are typically provided where the communications coverage provided by the overlying macro cell is poor or where a user wishes to use an alternative communications link provided locally, by the small cell base station, to communicate with the core network. Such a situation might arise where, for example, a user has a pre-existing communications link and the user wishes to use that link in preference to that provided by the macro cell network provider to communicate with the core network. These small cells, therefore, provide superior cellular coverage in residential, enterprise or hot-spot outdoor environments.

In a typical small cell base station, a broadband Internet protocol connection is used as "back haul" for connecting to the core network.

Although providing heterogeneous networks can provide performance improvements, such networks can also cause unexpected consequences. Accordingly, it is desired to provide an improved technique for use in heterogeneous networks.

SUMMARY

According to a first aspect, there is provided a network node method, comprising: determining a policy for reporting of a cell performance indicator by at least one small cell base station, the cell performance indicator being utilised for adjusting a cell bias associated with a small cell supported by that small cell base station; and transmitting the policy to the at least one small cell base station to be utilised during the reporting of a cell performance indicator.

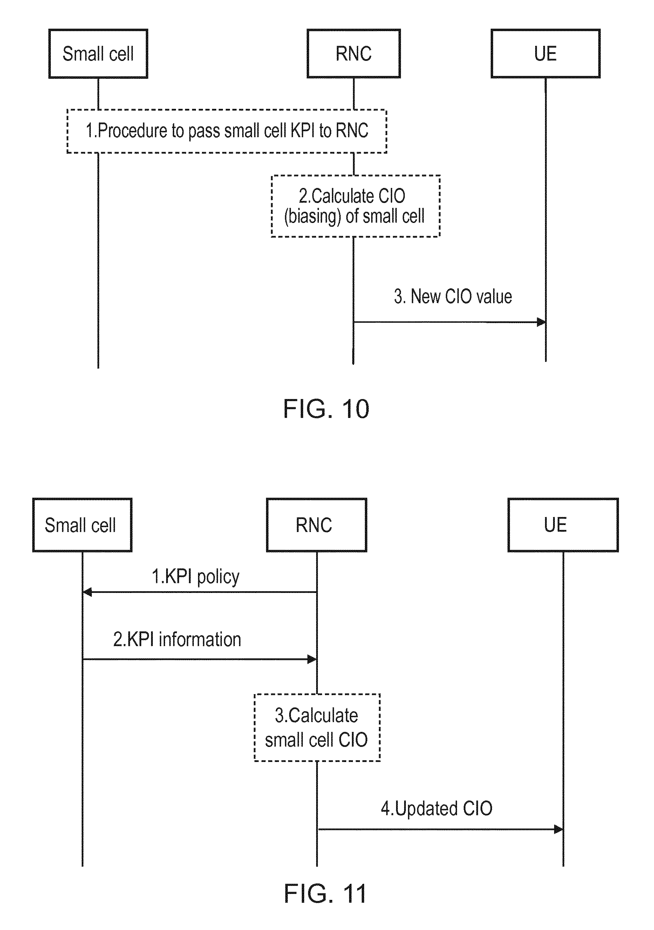

The first aspect recognises that a signalling method used to support a decentralized bias adaptation by means of signalling a key performance indicator (KPI) related to cell-edge performance from at least one base station to another base station or to a radio network controller can lead to sub-optimal performance. Each small cell base station signals its KPI to the macro base station or to a radio network controller (RNC). The macro base station or RNC then determines a suitable bias value for each small cell base station and signals the bias value for each small cell base station to the user equipment. Figure 10 illustrates decentralized bias adaptation by means of signalling a key performance indicator. User equipment is connected to a macro cell under an RNC, the small cell is a neighbour and the sequence of events is: Step 1 - Small cell reports KPI information to RNC; Step 2 - Utilising the small cell KPI and information on the macro cell KPI and other information, the RNC decides to update the small cell's Cell Individual Offset (CIO) in the user equipment's Neighbour Cell List (NCL); Step 3 - Using a measurement control message, the NCL for the small cell is updated with the new CIO value. In this decentralised approach, a change in KPI requires signalling over relevant network interfaces, e.g. from a small cell base station to the macro base station or RNC. Each time a user equipment hands into a small cell this is likely to have an effect (change) on the KPI. In a HetNet deployment with potentially several small cells deployed under any one macro cell, repeated signalling over these interfaces every time a KPI in one of the cells changes, can be an issue, not least in terms of the amount of network traffic generated. Accordingly, the first aspect recognises that a solution which seeks to reduce the amount of signalling between the small cell base stations and the macro nodes (over, for example, IuX interfaces) when utilising the decentralised approach would be beneficial.

Accordingly, a network node method may be provided. The method may comprise the step of determining a policy for reporting a cell performance indicator. That policy may be for at least one small cell base station. The small cell performance indicator may be used to adjust a cell bias for a small cell which is supported by a small cell base station. The policy may be transmitted to the small cell base station. The policy may be used by the small cell base station to control the reporting of the cell performance indicator. In this way, rather than always transmitting the cell performance indicator to the network node, the network node can control the circumstances under which the cell performance indicator is transmitted to ensure that it is only transmitted when necessary. This can help the network node to control the amount of cell performance indicators received to a manageable level.

In one embodiment, the policy specifies a threshold amount of change from a previously-reported cell performance indicator which, when exceeded, the cell performance indicator is to be reported. Accordingly, a threshold amount may be specified. Should the current performance indicator measured by the small cell base station differ to that which has previously been reported by greater than that threshold amount, then the current performance indicator is to be reported. This ensures that only significant changes to the cell performance indicator, which would result in a significant change to the cell bias, are reported.

In one embodiment, the policy specifies a threshold amount of change from a previously-reported cell performance indicator below which reporting of the cell performance indicator is to be prevented. Accordingly, when the cell performance indicator has not changed by more than the threshold amount, which would cause an insignificant adjustment to the cell bias, the current cell performance indicator is not transmitted in order to avoid unnecessary use of resources transmitting and processing this cell performance indicator.

In one embodiment, the threshold amount of change comprises one of an absolute change in value and a percentage change in value. Accordingly, the threshold amount maybe defined as either an absolute value or as a percentage change.

In one embodiment, the policy specifies a range outside of which the cell performance indicator is to be reported. Accordingly, a range may be specified and should the cell performance indicator fall outside of that range then the current cell performance indicator is transmitted. This again ensures that the current cell performance indicator is only transmitted when it is likely to result in a significant change to the cell bias.

In one embodiment, the policy specifies a range within which reporting of the cell performance indicator is to be prevented. Accordingly, when the current cell performance falls within the range then no transmission of the current cell performance indicator is to be made. This again ensures that the current cell performance indicator is only transmitted when it is likely to result in a significant change to the cell bias.

In one embodiment, the policy specifies an interval between each cell performance indicator being reported. Accordingly, the policy may specify that the current cell performance indicator is transmitted periodically, again in order to reduce the resources used in transmitting and processing that indicator.

In one embodiment, the policy specifies a minimum interval between each cell performance indicator being reported. Accordingly, a minimum time period between transmissions of the current cell performance indicator maybe specified.

In one embodiment, the step of determining comprises determining the policy based on resources available to process the reported cell performance indicators. Accordingly, the amount of resources available may be considered when determining the policy in order to adapt the policy so that the amount of cell performance indicators received can be accommodated by the resources available.

In one embodiment, the step of determining comprises determining an updated policy and the step of transmitting comprises transmitting the updated policy. Accordingly, the policy may be updated from time to time and transmitted to the small cell base station, based typically on the circumstances of the network node, such as the actual amount of performance indicators received and/or the resources available.

In one embodiment, the method comprises the step of transmitting an indication to the at least one small cell base station to indicate to the at least one small cell base station that the policy should be one of activated and deactivated. Accordingly, the network node may cause the small cell base station to either employ or ignore the policy. This enables the policy to be pre-loaded by the small cell base station and activated when required (such as when the network node receives too many cell performance indicators or is unable to process the cell performance indicators it receives with the resources it has available).

In one embodiment, the step of determining comprises determining the policy associated with each of a plurality of small cell base stations and the step of transmitting comprises transmitting the policy to each of the plurality of small cell base stations. Accordingly, a policy may be provided for each small cell base station separately and transmitted to each of those small cell base stations. This enables each small cell base station to receive either the same or a different policy.

According to a second aspect, there is provided a network node, comprising: determining logic operable to determine a policy for reporting of a cell performance indicator by at least one small cell base station, the cell performance indicator being utilised for adjusting a cell bias associated with a small cell supported by that small cell base station; and transmission logic operable to transmit the policy to the at least one small cell base station to be utilised during the reporting of a cell performance indicator.

In one embodiment, the policy specifies a threshold amount of change from a previously-reported cell performance indicator which, when exceeded, the cell performance indicator is to be reported.

In one embodiment, the policy specifies a threshold amount of change from a previously-reported cell performance indicator below which reporting of the cell performance indicator is to be prevented.

In one embodiment, the threshold amount of change comprises one of an absolute change in value and a percentage change in value.

In one embodiment, the policy specifies a range outside of which the cell performance indicator is to be reported.

In one embodiment, the policy specifies a range within which reporting of the cell performance indicator is to be prevented.

In one embodiment, the policy specifies an interval between each cell performance indicator being reported.

In one embodiment, the policy specifies a minimum interval between each cell performance indicator being reported.

In one embodiment, the determining logic is operable to determine the policy based on resources available to process the reported cell performance indicators.

In one embodiment, the determining logic is operable to determine an updated policy and the step of transmitting comprises transmitting the updated policy.

In one embodiment, the transmission logic is operable to transmit an indication to the at least one small cell base station to indicate to the at least one small cell base station that the policy should be one of activated and deactivated.

In one embodiment, the determining logic is operable to determine the policy associated with each of a plurality of small cell base stations and the step of transmitting comprises transmitting the policy to each of the plurality of small cell base stations.

According to a third aspect, there is provided a small cell base station method, comprising: receiving a policy for reporting of a cell performance indicator, the cell performance indicator being utilised for adjusting a cell bias associated with a small cell supported by the small cell base station; and determining, based on the policy, whether to report the cell performance indicator.

In one embodiment, the step of determining comprises determining whether conditions specified in the policy are met and, if so, reporting the cell performance indicator.

In one embodiment, the step of determining comprises determining whether conditions specified in the policy are met and, if not, preventing reporting the cell performance indicator.

In one embodiment, the policy specifies a threshold amount of change from a previously-reported cell performance indicator which, when exceeded, the cell performance indicator is to be reported. Hence, when the threshold amount is exceeded, the method comprises the step of transmitting the cell performance indicator.

In one embodiment, the policy specifies a threshold amount of change from a previously-reported cell performance indicator below which reporting of the cell performance indicator is to be prevented. Hence, when the threshold amount is not exceeded, the cell performance indicator is not transmitted.

In one embodiment, the threshold amount of change comprises one of an absolute change in value and a percentage change in value.

In one embodiment, the policy specifies a range outside of which the cell performance indicator is to be reported.

In one embodiment, the policy specifies a range within which reporting of the cell performance indicator is to be prevented.

In one embodiment, the policy specifies an interval between each cell performance indicator being reported.

In one embodiment, the policy specifies a minimum interval between each cell performance indicator being reported.

In one embodiment, the step of receiving comprises receiving an updated policy.

In one embodiment, the method comprises the step of receiving an indication that the policy should be one of activated and deactivated.

According to a fourth aspect, there is provided a small cell base station, comprising: reception logic operable to receive a policy for reporting of a cell performance indicator, the cell performance indicator being utilised for adjusting a cell bias associated with a small cell supported by the small cell base station; and determining logic operable to determine, based on the policy, whether to report the cell performance indicator.

In one embodiment, the determining logic is operable to determine whether conditions specified in the policy are met and, if so, to report the cell performance indicator.

In one embodiment, the determining logic is operable to determine whether conditions specified in the policy are met and, if not, preventing reporting the cell performance indicator.

In one embodiment, the policy specifies a threshold amount of change from a previously-reported cell performance indicator which, when exceeded, the cell performance indicator is to be reported.

In one embodiment, the policy specifies a threshold amount of change from a previously-reported cell performance indicator below which reporting of the cell performance indicator is to be prevented.

In one embodiment, the threshold amount of change comprises one of an absolute change in value and a percentage change in value.

In one embodiment, the policy specifies a range outside of which the cell performance indicator is to be reported.

In one embodiment, the policy specifies a range within which reporting of the cell performance indicator is to be prevented.

In one embodiment, the policy specifies an interval between each cell performance indicator being reported.

In one embodiment, the policy specifies a minimum interval between each cell performance indicator being reported.

In one embodiment, the reception logic is operable to receive an updated policy.

In one embodiment, the reception logic is operable to receive an indication that the policy should be one of activated and deactivated.

According to a fifth aspect, there is provided a computer program product operable, when executed on a computer, to perform the method steps of the first or third aspects. Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

## BRIEF DESCRIPTION OF THE DRAWINGS

Embodiments of the present invention will now be described further, with reference to the accompanying drawings, in which:

Figure 1 illustrates information flow between base stations when performing bias control;
Figure 2 illustrates a bias controller of a small cell base station in more detail;
Figure 3 illustrates information flow between base stations and a controller when performing bias control;
Figures 4 to 9 illustrate simulations results;
Figure 10 illustrates decentralized bias adaptation by means of signalling a key performance indicator; and
Figure 11 illustrates the main messaging steps taken by the different nodes within the network according to one embodiment.

## DESCRIPTION OF THE EMBODIMENTS

### Overview

Before discussing the embodiments in any more detail, first an overview will be provided. Embodiments recognise that in order to support a decentralised biased adaption technique, a large amount of signalling may be required over the relevant network interfaces (for example, from a small cell base station to the macro cell base station or radio network controller, or equivalents). Each time a user equipment hands in to a small cell, this is likely to have an effect and to change the cell performance indicator. In a HetNet deployment with several small cells deployed under any one macro cell, repeated signalling over these interfaces every time the performance indicator in one of the cells changes can be an issue, particularly in terms of the amount of network traffic generated.

Accordingly, embodiments provide a technique which reduces the amount of signalling between the small cell base stations and the other network nodes (for example, over the IuX interfaces) when using such a decentralised technique. In order to achieve such reduced signalling or messaging of the cell performance indicator or KPI over the various network interfaces between the small cell and, for example, the radio network controller, small cell gateway, base station or other network node, a policy is introduced which is generated by that network node and signalled or transmitted to the small cell base station. The policy recognises that the overhead of transmitting and processing such signalling sometimes outweighs the benefit of receiving these performance indicators. In particular, when the performance indicators are relatively static, or fall within particular expected boundaries or ranges, the benefit of providing such indicators may be insufficient compared to the drain on resources caused by transmitting these indicators. It will be appreciated that this would particularly be the case when the cell performance indicator leads to little or no change in the cell bias allocated to the small cell by the network node.

Accordingly, the policy used may reduce the frequency of the reported cell performance indicator and this policy could take several forms. One policy may be to only report the performance indicator when the performance indicator changes by a particular value or amount. Another policy may be to only report the performance indicator when its value is outside of a range or boundary. Another policy would be to only report the performance indicator when that performance indicator changes by a particular percentage value. Another policy would be that a change in performance indicator is reported periodically, where the length of this period is set to be long enough to ensure no adverse effects on the receiving entity. An example adverse effect would be that there was too much signalling being received on the interface, or that insufficient resources, such as processor resources, were available to process the received performance indicators. It will be appreciated that other policies may utilise any combination of those characteristics mentioned above.

The policy may be fixed, meaning that all small cells receive the same policy or may be updated or specified on an individual basis to each small cell. In embodiments, the policy may be sent to the small cell prior to any report being issued by the small cell, or may be sent after the first or 'n'th report. Likewise, the policy may be updated as required by the network node such as, for example, the RNC and may be activated or deactivated by the network node such as, for example, the RNC, as required.

The KPI information from the small cell may be sent to the network node such as, for example, the RNC using an existing resource status indication message specified in 3GPP TS25.433, which is a message sent from the base station to the network node such as, for example, the RNC to indicate a change of resource of the cell. Alternatively, a new message procedure may be utilised.

Before discussing this technique in any more detail, a fuller description of KPI signalling approaches will now be given.

Biasing Control - Distributed Approach

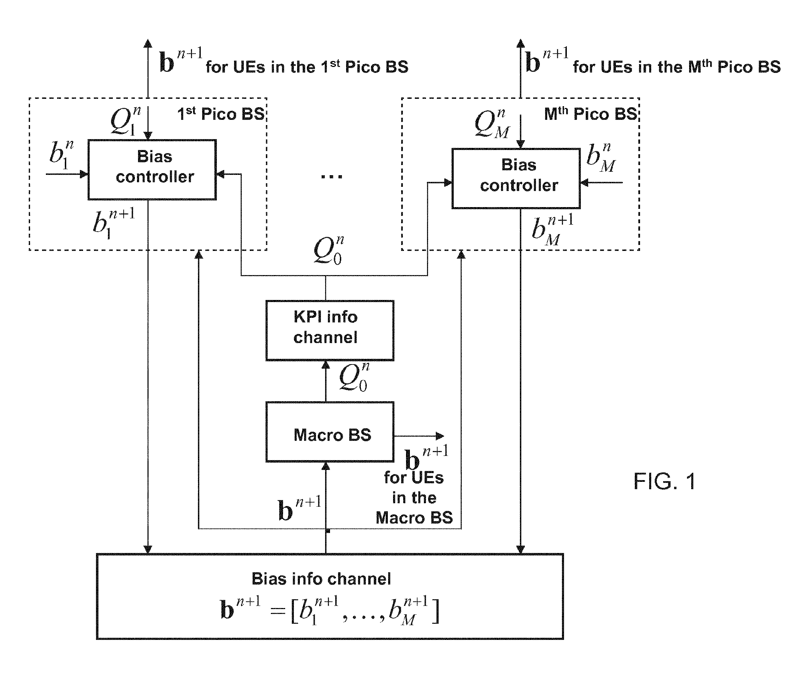

As can be seen in Figure 1, a macro base station informs all small cell base stations in its coverage area (i.e. within the macro cell) of its current key performance indicator (KPI). Then, each small cell base station compares its own current KPI with the macro base station KPI and adjusts its own preferred bias value to increase or decrease the user equipment offload to that small cell. The macro base station uses a KPI information channel to inform small cell base stations in its coverage area of its current KPI such as, for example, cell edge throughput.

Bias Controller

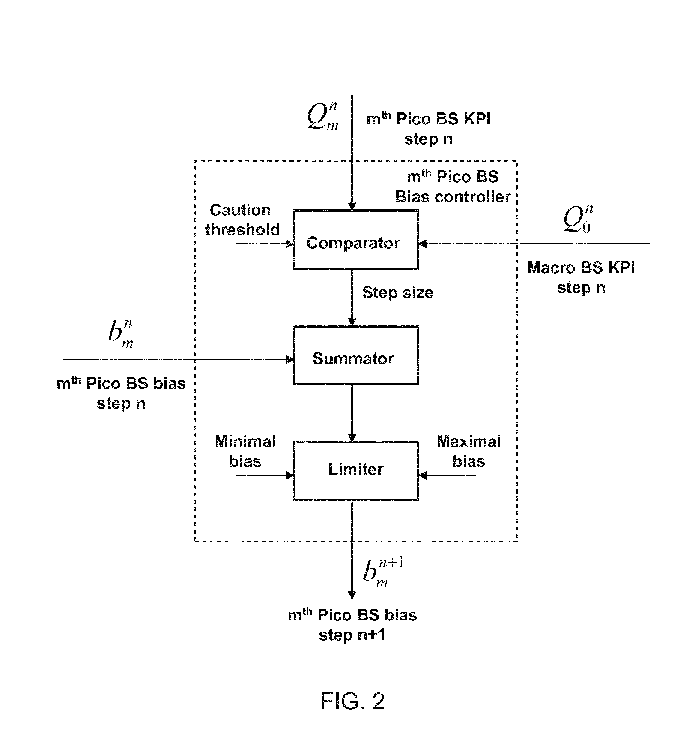

As can be seen in Figure 2, each small cell base station estimates its own KPI and compares it with the macro base station KPI by means of a comparator in a bias controller. Depending on the value of a caution threshold parameter, the comparator generates: a) a positive step size if the given small cell base station can accept more user equipment; b) a negative step size if the small cell base station is already overloaded, or c) a zero step size if the situation is not certain. Then, the current bias value of the given small cell base station is updated in a summator and, after limitation according to minimum and maximum bounds in a limiter, is sent to a bias information channel. The bias information channel collects the updated bias values from all small cell base stations in the coverage area of the macro base station and sends this information to the corresponding macro base station. Thereafter, the macro base station informs its user equipment of the new bias values for the small cells to allow them to update their user association rules. The approach can be applied in single or dual (multi) carrier heterogeneous networks. For example, in a soft reuse configuration, the high power macro base stations inform the heterogeneous networks of its KPI and the low power macro base station is considered similarly to small cell base stations.

Biasing Control - Centralised Approach

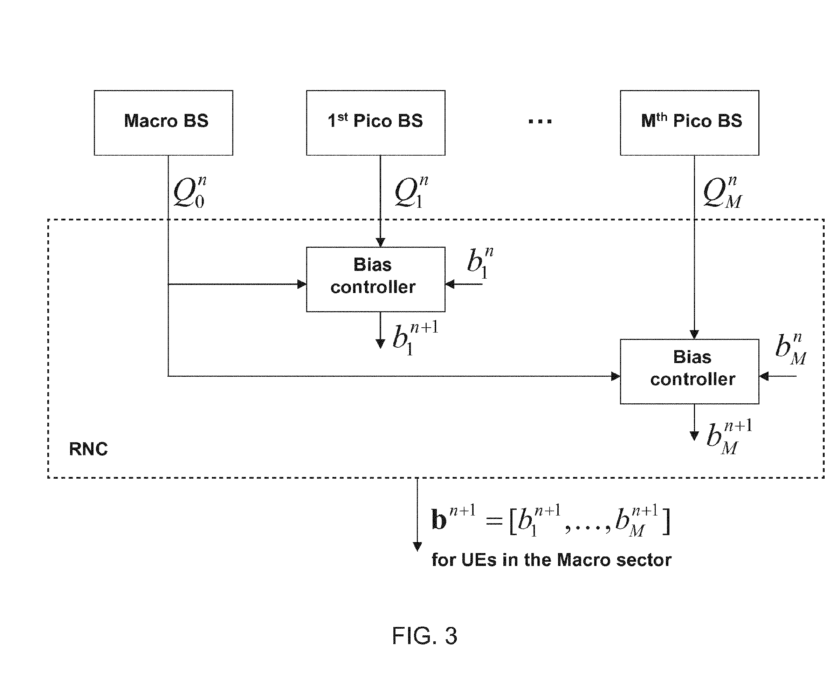

As can be seen in Figure 3, each small cell base station signals its KPI to the macro base station or, in this example, to a radio network controller (RNC). In this embodiment, it is not necessary for the macro base station to provide its KPI to the small cell base stations. The macro base station or the RNC then determines a suitable bias value for each small cell and signals the bias value for each small cell to the user equipment.

The step of determining the suitable bias value for a small cell base station may take into account the KPI value signalled by the small cell base station, and/ or other information such as a KPI of the macro base station, the load level of the macro base station, or the load level of the small cell base station.

A small cell base station may additionally signal its load level to the macro base station or the RNC. The signalled value of load level may be an absolute load level, a relative load level, a quantised indication of load level (for example, "fully loaded" or "not fully loaded"), or an indication of the amount of spare capacity.

Key Performance Indicator

In any of the above approaches, the KPI may comprise:

- an indication of cell-edge throughput, such as:

○ the xth percentile throughput
○ the xth percentile Eclo value reported by the user equipment and number of the associated user equipment
○ the xth percentile CQI value reported by the user equipment and number of the associated user equipment
○ any of the above for a subset of the user equipment, e.g.:

■ user equipment with a given service (e.g. voice), or
■ user equipment with data, or
■ served user equipment.

Particularly, the underplaying reason for the second KPI above is the assumption that the user equipment throughput typically may be approximately proportional to the Eclo value and backward proportional to the number of user equipment associated with the corresponding macro or small cell base station.

Example Implementation

In an example implementation, the macro and small cell base stations are conventional UMTS base stations. The macro and small cell base stations use the downlink cell edge throughput as the KPI. It can be estimated as the 5% point of the cumulative distribution function (CDF) calculated over all user equipment associated with corresponding base stations. The long term downlink throughput can be defined simply as the scheduled transport block size for the user equipment and the base station would need to keep track of this using a conventional low-pass filter.

The KPI information channel can be implemented sending the macro cell edge throughput ( $Q_0^n$ in Fig. 1) to the RNC. Then, RNC can broadcast this information to the relevant small cell base stations. The corresponding messages from the macro base station to the RNC and from the RNC to the small cell base stations need standard modifications.

Comparator

The comparator in the bias controller can be implemented as follows:

$$\delta_m^n = \begin{cases} \nabla, \text{if } \dfrac{Q_m^n}{Q_0^n} > \gamma_{\max}, \text{or } K_m^n = 0 \\ 0, \text{if } \gamma_{\min} \le \dfrac{Q_m^n}{Q_0^n} \le \gamma_{\max} \\ -\nabla, \text{if } \dfrac{Q_m^n}{Q_0^n} < \gamma_{\min} \end{cases}, \quad m = 1,\ldots,M, \qquad \text{(Equation 1)}$$

where $\delta_m^n$ is the step size (in dB) for the $m$ th small cell base station at the $n$ th iteration of adaptation, V > 0 is the step size value, $\gamma_{\min}$ and $\gamma_{\max}$ are the caution threshold parameters, $Q_0^n$ is the KPI estimate for the macro base station at the $n$ th iteration, $Q_m^n$ is the KPI estimate for the $m$ th small cell base station at the $n$ th iteration, and $M$ is the number of small cell base stations in the macro base station coverage area.

Summator

The summator in the bias controller can be implemented as follows:

$$\tilde{b}_m^{n+1} = b_m^n + \delta_m^n, \qquad \text{(Equation 2)}$$

where $\tilde{b}_m^{n+1}$ is the unrestricted bias value for the $m$ th Pico BS at the ( $n$ +1)th iteration.

Limiter

The Limiter in the bias controller can be implemented as follows:

$$b_m^{n+1} = \begin{cases} b_m^{\max}, \text{if } \tilde{b}_m^{n+1} > b_m^{\max} \\ \tilde{b}_m^{n+1}, \text{if } b_m^{\min} \leq \tilde{b}_m^{n+1} \leq b_m^{\max} \\ b_m^{\min}, \text{if } \tilde{b}_m^{n+1} < b_m^{\min} \end{cases}, \qquad \text{(Equation 3)}$$

where $b_m^{\min}$ and $b_m^{\max}$ are the minimum and maximum bias values for the $m$ th small cell base station, which restrict the bias range, for example to avoid possibility of association with very low Eclo user equipment.

The bias information channel collects the updated bias values for all $M$ small cell base stations, forms the $M$ -dimension bias vector $\mathbf{b}^{n+1} = [b_1^{n+1}, \ldots, b_M^{n+1}]$, and sends it to all base stations in the macro cell coverage area. The bias information channel can be implemented at the RNC. The corresponding messages from the small cell base station to the RNC and from the RNC to the macro and small cell base stations need standard modifications.

The macro and small cell base stations send the updated bias vector to the user equipment that they are currently associated with. The updated bias vector can be sent to the user equipment using, for example, a Measurement Control Message or during an Active Set Update. It is also possible to send this information from the base station (such as a low power node (LPN) and Macro) to the user equipment via an HS-SCCH order.

Association Update

The user equipment update their association according to the following association rule:

$$\text{ID}_k^{n+1} = \begin{cases} \overline{\text{ID}}_k^{n+1}, \text{if } \mathbf{u}_k^{n+1}(\overline{\text{ID}}_k^{n+1}) \geq \mathbf{u}_k^{n+1}(\text{ID}_k^n) + \beta \\ \text{ID}_k^n, \text{if } \mathbf{u}_k^{n+1}(\overline{\text{ID}}_k^{n+1}) < \mathbf{u}_k^{n+1}(\text{ID}_k^n) + \beta \end{cases}, \qquad \text{(Equation 4)}$$

where $\text{ID}_k^n \in [1, M+1]$ is the user equipment identification (association) corresponding to its position in the association selection vector $\mathbf{u}_k^n = [\rho_{k0}^n, \rho_{k1}^n + b_1^n, \ldots, \rho_{kM}^n + b_M^n]$ for the $k$ th user equipment at the $n$ th iteration, $\rho_{k0}^n$ and $\rho_{km}^n$, $m = 1,\ldots,M$ are the Eclo values (in dB) for the $k$ th user equipment at the $n$ th iteration from the macro and low power base station correspondingly, $\overline{\text{ID}}_k^{n+1} = \arg \max(\mathbf{u}_k^n)$ is the position of the maximum element in the selection vector, $\beta \geq 0$ is the handover hysteresis threshold (in dB) defined in [6].

As suggested above, another implementation can use the Eclo based KPI as follows:

$$Q_0^n = \frac{\tilde{\rho}_0^n}{N_0^n}, \ Q_m^n = \frac{\tilde{\rho}_m^n}{N_m^n}, \ m = 1,\ldots,M, \qquad \text{(Equation 5)}$$

where $\tilde{\rho}_0^n$ and $\tilde{\rho}_m^n$ are the 5% points of the Eclo CDFs of the $N_0^n$ and $N_m^n$ user equipment associated with the macro and the $m$ th small cell base station at the $n$ th iteration correspondingly.

Taking into account that the RNC may be involved in implementation of the KPI information channel and the bias information channel in Figure 1, decentralized bias updates also can be implemented at the RNC as illustrated in Figure 3.

Although the approach shown in Figure 3 may seem like a centralized one in terms of communications between different network elements, it will be appreciated that is still essentially decentralized in terms of bias adaptation. In particular, that approach does not need an external utility function, or a pre-calculated data base, as well as complicated numerical optimization algorithms.

Simulation Results

Particular values for the system parameters are specified in the following simulation example. Simulation scenario:

- 2 carriers of 5 MHz band
- 7 hexagonal Macro sectors with 4 randomly placed small (Pico) cells per carrier
- Pathloss models: L=128.1+37.6log10(R) (Macro), L=140.7+36.7log10(R) (Pico)
- 3GPP horizontal and vertical Macro antenna patterns
- 17 dB and 8dB Macro and Pico antenna gain, 3dB cable loss
- 43dBm transmit power for Macro base station (BS) in carrier 1
- 30dBm transmit power for Macro BS in carrier 2, and Pico cell BSs in both carriers,
- 10 % pilot power
- 100dBm noise power
- 500m inter site distance
- Full buffer traffic model
- Type 2 (one receive antenna at user equipment (UEs)) and Type 3 (two receive antennas at UEs)
- Pico cell BS and UE dropping according to Configuration 4b [8] for all UEs.
  Particularly, totally 60 UEs per each carrier are allocated in a Macro-sector, including 20 uniformly distributed UEs and 10 UEs uniformly distributed around each Pico BS with 40m radius
- Min distance: 75m PicoBS-MacroBS, 40m PicoBS-PicoBS, 35m UE-MacroBS, 10m UE-PicoBS
- No mobility assumed.

The total number of low power BSs per Macro sector is $M$ = 9 (4 Pico BSs in each carrier plus one low power Macro BS in carrier 2). So, the dimension the UE association selection vector is 10. The implementation parameters are as follows: $\nabla$ = 0.2dB, $\gamma_{min}$ = 0.75, $\gamma_{max}$ = 1.5, $\beta$ = 1dB, $b_m^{\min} = 0\,\mathrm{dB}$ for all 9 low power BSs, $b_m^{\max} = 3\,\mathrm{dB}$ for all 4 low power nodes in carrier 1, and $b_m^{\max} = 2\,\mathrm{dB}$ in all 5 low power BSs in carrier 2. Type 2 receiver is assumed for all UEs.

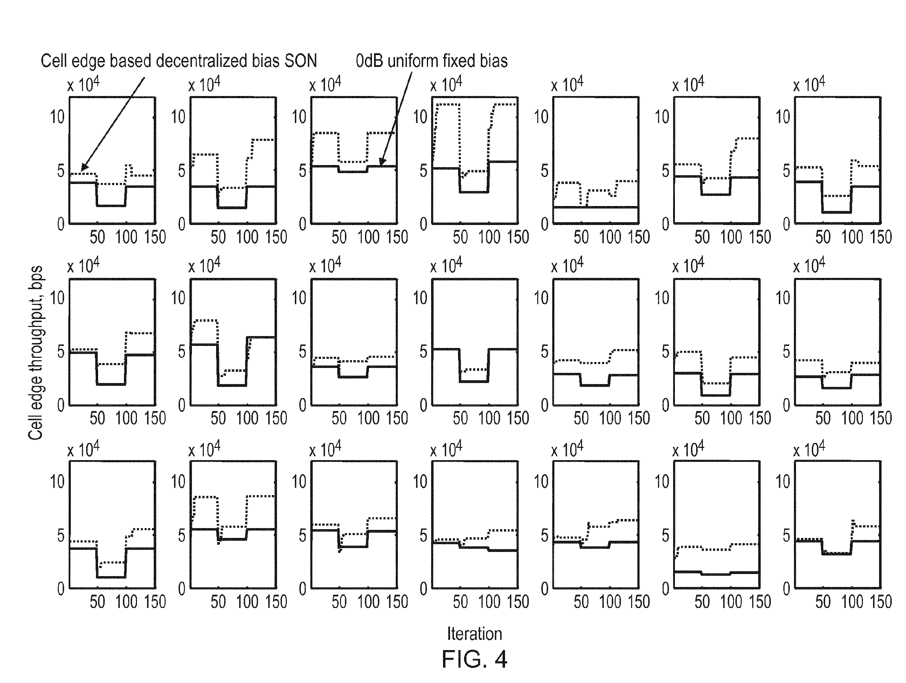

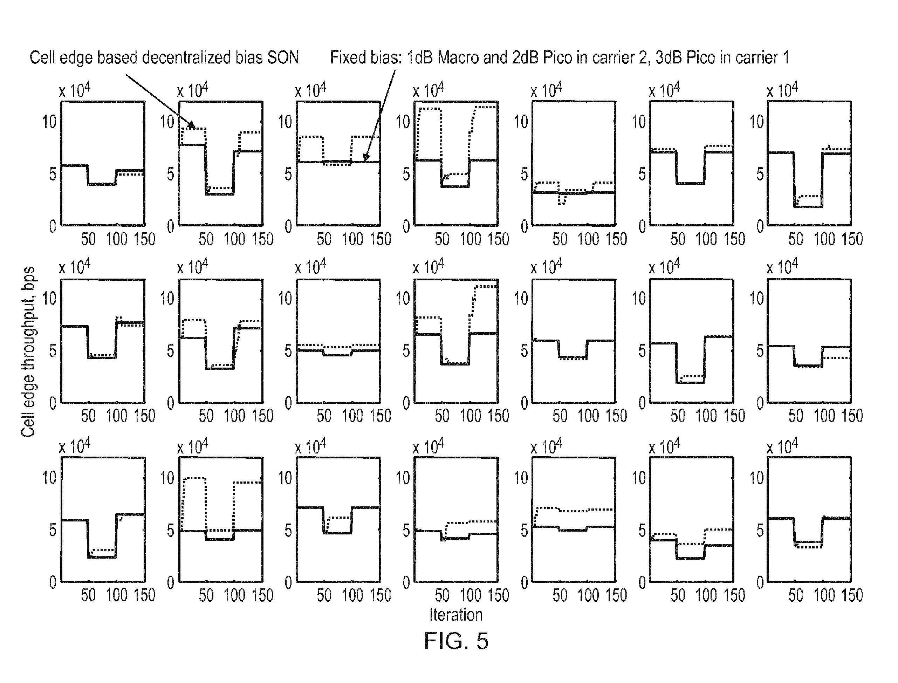

The typical simulation results in 21 Macro sectors are shown in Figures 4 and 5. The overall (Macro plus Pico in both carriers) cell edge throughput is plotted in 21 Macro sector coverage areas for the fixed (green curves) and adaptive (blue curves) bias values. In both scenarios, all Pico BSs are active for the first 50 iterations, then one randomly selected Pico BS is disabled in both carriers for the next 50 iterations, and all Pico BSs are active again for the last 50 iterations.

The zero bias is assumed for all low power nodes as the fixed bias and initialization for the adaptive solution in Figure 4.

It can be seen that the approach significantly outperforms the no range expansion case in all cells and quickly adapts to the changing network configuration.

The quasi uniform bias values (3 dB for all Pico BSs in carrier 1, 2 dB for all Pico BSs in carrier 2 and 1 dB for Macro BS in carrier 2) especially optimized for the simulated scenario are used for the fixed bias configuration and as initialization for the decentralized bias selection in Figure 5. It can be seen that the approach still outperforms the non-adaptive one in most of the cells.

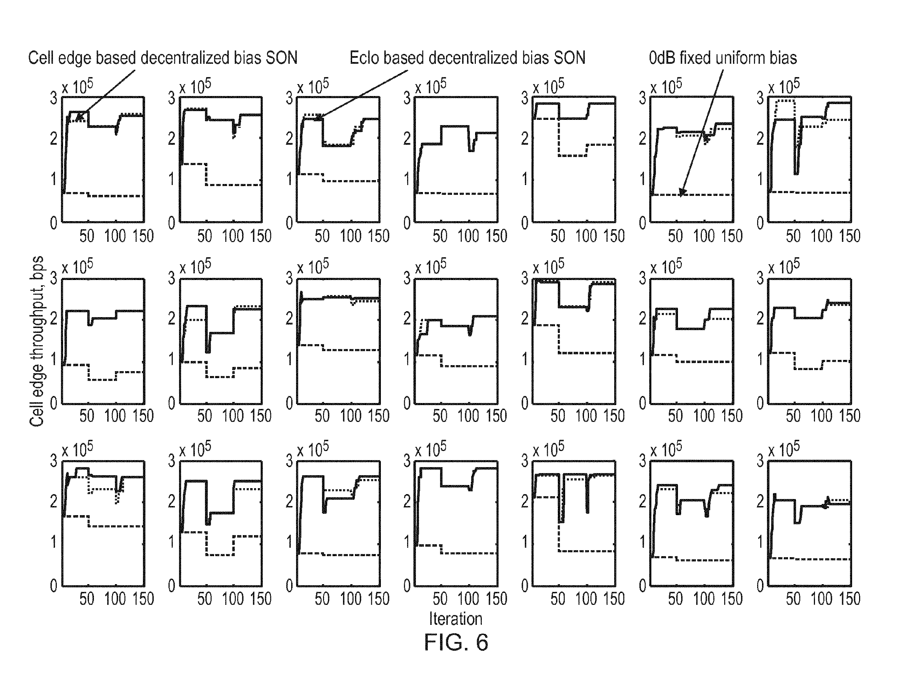

Applicability of the approach in different network configurations is additionally illustrated in Figures 6 to 9, which present the simulation results in the dedicated carrier HetNet scenario. A full 43dBm power Macro BS and no Pico cells are assumed in carrier 1. On the contrary, no Macro BS and 4 Pico BSs are used in carrier 2. The simulation scenario is similar to the previous one, but with 30 UEs per Macro sector per carrier. The total number of Pico BSs per Macro sector is $M$ = 4. So, the dimension the UE association selection vector is 5. The implementation parameters are as follows: $\nabla$ = 0.2 dB, $\gamma_{min}$ = 0.75, $\gamma_{max}$ =1.5, $\beta$ = 1 dB, $b_m^{\min} = 0\,\mathrm{dB}$ and $b_m^{\max} = 3\,\mathrm{dB}$ for all 4 Pico. A type 3 receiver is assumed for all UEs. Both KPIs presented in the implementation section above are used: the cell edge throughput KPI and EcIo/N KPI.

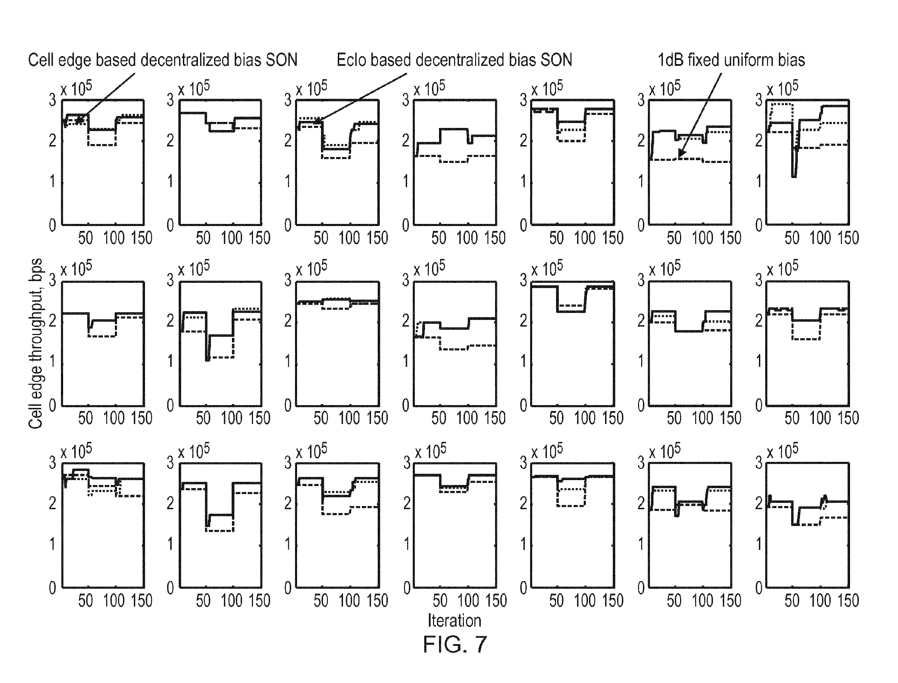

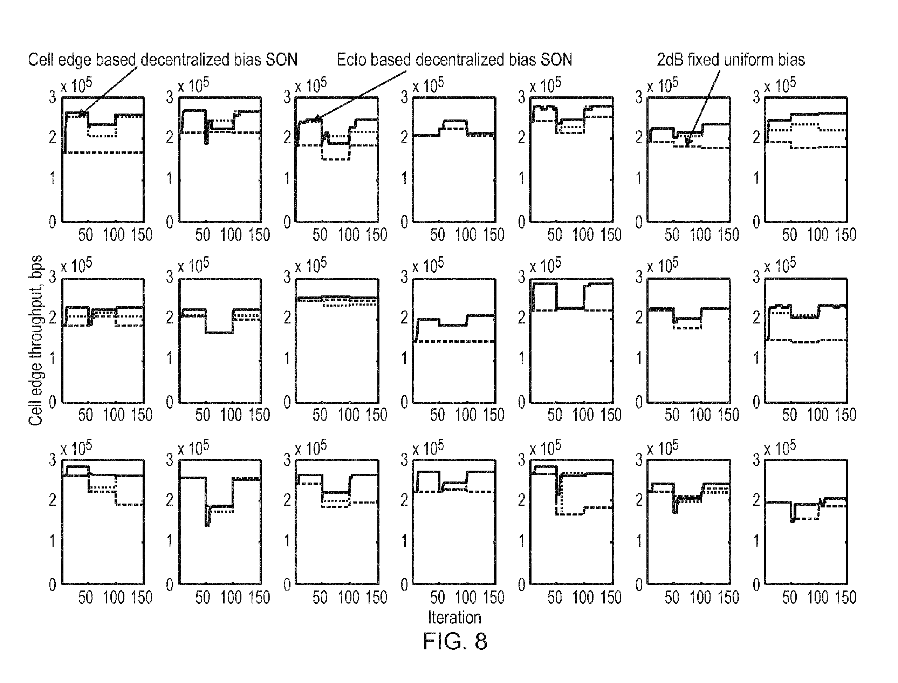

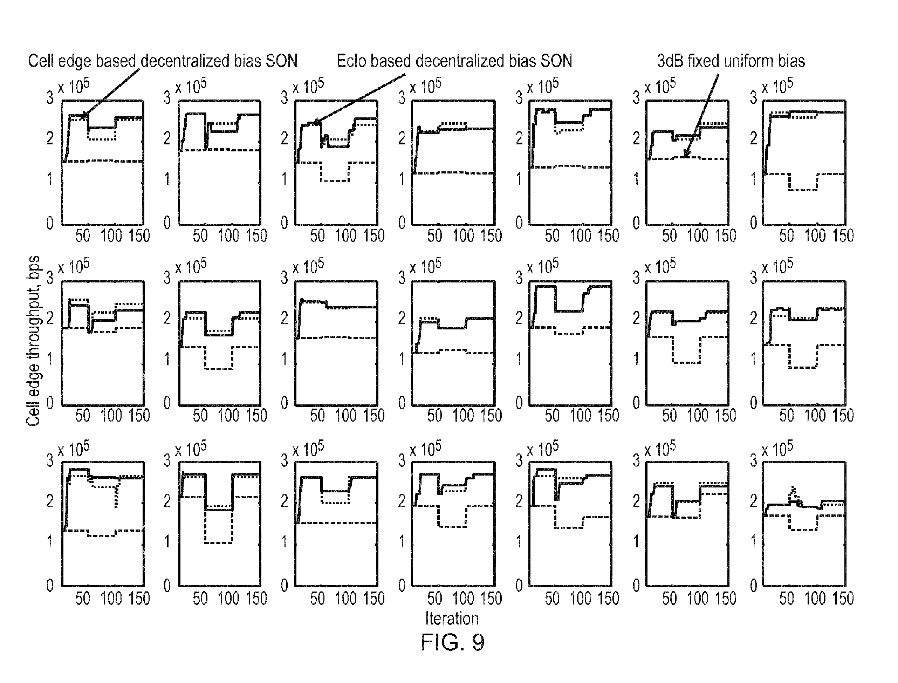

The uniform [0,1,2,3]dB bias is assumed for all Pico BSs as the fixed bias and initialization for the adaptive solution in Figures 6 to 9 correspondingly. Again, it can be seen that the proposed solution significantly outperforms the fixed bias case, especially for 0dB and 3dB fixed bias values in Fig. 6 and 9, and quickly adapts to the changing network configuration for both KPIs used for decentralized bias adaptation. Also, the presented results show that simple optimization of the uniform fixed bias cannot be efficient in all scenarios. Particularly, it can be seen in Figure 7 that the 1dB fixed bias gives better results in sector 1 compared to the 2dB results in Figure 8, but the situation in sector 6 is the opposite. At the same time, the embodiment finds the best results in both scenarios independently on the initialization and for both proposed KPIs used for adaptation.

KPI Policy Usage

Figure 10 illustrates the main messaging steps taken by the different nodes within the network according to one embodiment. Although this example refers to the RNC as the controlling entity, it will be appreciated that the small cell may also be the controlling entity or even the macro cell or a small cell gateway, where it receives KPI from the small cells under its coverage. It will also be appreciated that this technique is equally applicable to other HetNet technologies, such as those employed by Long Term Evolution (LTE) networks.

Returning to Figure 10, at step S1, the RNC determines the policy to be employed by the small cell base station when determining whether or not to send KPI information. It will be appreciated that this policy may be any suitable policy which balances the requirements to provide sufficiently accurate KPI information to enable the small cell bias to be adapted to suit the current conditions, but which also minimises the use of resources when providing this information to an acceptable level. For example, the policy may be set in accordance with any of those mentioned above, such as, for example, only reporting the KPI when the KPI changes by a particular value, only reporting the KPI when its value is outside of a range, only reporting the KPI when the KPI changes by a particular percentage value or only reporting the KPI periodically, or a combination of any of these. This policy may be set on a per-small cell basis or may be sent to all small cells being supported by the RNC or within the coverage area of a particular macro base station. The policy may be transmitted to the small cell before any KPI information is provided, maybe transmitted should some KPI information be received, or may be transmitted after another period of time. The KPI policy may indicate to the small cell base station when to enact that policy.

When the policy is enacted, the small cell base station determines whether the conditions specified by the policy are met. If the conditions are not met, then the small cell base station fails to transmit any KPI information. Should the conditions specified by the policy be met, then, at step S2, the KPI information is transmitted from the small cell to the RNC. The amount of KPI information received by the RNC would typically be less than that which would have been received were no policy transmitted to the small cell base stations. Should the conditions experienced by the RNC change (for example, should the resources available to the RNC change), then the policy may be updated and retransmitted to one or more of the small cell base stations.

At step S3, the RNC takes the received KPI information into account when deciding on the bias or CIO value of the small cell.

At step S4, the updated CIO value is then transmitted to the user equipment.

Accordingly, it can be seen that by using this approach the number of messages sent over various network interfaces to update a cell's CIO value for a user equipment is reduced.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network node method, comprising:

   determining a policy for reporting of a cell performance indicator by at least one small cell base station, said cell performance indicator being utilised for adjusting a cell bias associated with a small cell supported by that small cell base station; and
   transmitting said policy to said at least one small cell base station to be utilised during said reporting of a cell performance indicator.

2. The method of claim 1, wherein said policy specifies a threshold amount of change from a previously-reported cell performance indicator which, when exceeded, said cell performance indicator is to be reported.

3. The method of claim 1 or 2, wherein said policy specifies a threshold amount of change from a previously-reported cell performance indicator below which reporting of said cell performance indicator is to be prevented.

4. The method of any preceding claim, wherein said threshold amount of change comprises one of an absolute change in value and a percentage change in value.

5. The method of any preceding claim, wherein said policy specifies a range outside of which said cell performance indicator is to be reported.

6. The method of any preceding claim, wherein said policy specifies a range within which reporting of said cell performance indicator is to be prevented.

7. The method of any preceding claim, wherein said policy specifies an interval between each cell performance indicator being reported.

8. The method of any preceding claim, wherein said policy specifies a minimum interval between each cell performance indicator being reported.

9. The method of any preceding claim, wherein said step of determining comprises determining said policy based on resources available to process reported said cell performance indicators.

10. The method of any preceding claim, wherein said step of determining comprises determining an updated policy and said step of transmitting comprises transmitting said updated policy.

11. The method of any preceding claim, wherein said step of determining comprises determining said policy associated with each of a plurality of small cell base stations and said step of transmitting comprises transmitting said policy to each of said plurality of small cell base stations.

12. A network node, comprising:

determining logic operable to determine a policy for reporting of a cell performance indicator by at least one small cell base station, said cell performance indicator being utilised for adjusting a cell bias associated with a small cell supported by that small cell base station; and
transmission logic operable to transmit said policy to said at least one small cell base station to be utilised during said reporting of a cell performance indicator.

13. A small cell base station method, comprising:

receiving a policy for reporting of a cell performance indicator, said cell performance indicator being utilised for adjusting a cell bias associated with a small cell supported by said small cell base station; and
determining, based on said policy, whether to report said cell performance indicator.

14. A small cell base station, comprising:

reception logic operable to receive a policy for reporting of a cell performance indicator, said cell performance indicator being utilised for adjusting a cell bias associated with a small cell supported by said small cell base station; and
determining logic operable to determine, based on said policy, whether to report said cell performance indicator.

15. A computer program product operable, when executed on a computer, to perform the method steps of any one of claims 1 to 11 or 13.


**Amended claims in accordance with Rule 137(2) EPC.**

1. A network node method, comprising:

determining a policy for reporting of a cell performance indicator by at least one small cell base station, said cell performance indicator being utilised for adjusting a cell bias associated with a small cell supported by that small cell base station, changes in said cell bias changing a user equipment offload to said small cell; and
transmitting said policy to said at least one small cell base station to be utilised during said reporting of a cell performance indicator;
wherein said policy specifies a threshold amount of change from a previously-reported cell performance indicator which, when exceeded, said cell performance indicator is to be reported.

2. The method of claim 1, wherein said policy specifies a threshold amount of change from a previously-reported cell performance indicator below which reporting of said cell performance indicator is to be prevented.

3. The method of any preceding claim, wherein said threshold amount of change comprises one of an absolute change in value and a percentage change in value.

4. The method of any preceding claim, wherein said policy specifies a range outside of which said cell performance indicator is to be reported.

5. The method of any preceding claim, wherein said policy specifies a range within which reporting of said cell performance indicator is to be prevented.

6. The method of any preceding claim, wherein said policy specifies an interval between each cell performance indicator being reported.

7. The method of any preceding claim, wherein said policy specifies a minimum interval between each cell performance indicator being reported.

8. The method of any preceding claim, wherein said step of determining comprises determining said policy based on resources available to process reported said cell performance indicators.

9. The method of any preceding claim, wherein said step of determining comprises determining an updated policy and said step of transmitting comprises transmitting said updated policy.

10. The method of any preceding claim, wherein said step of determining comprises determining said policy associated with each of a plurality of small cell base stations and said step of transmitting comprises transmitting said policy to each of said plurality of small cell base stations.

11. A network node, comprising:

determining logic operable to determine a policy for reporting of a cell performance indicator by at least one small cell base station, said cell performance indicator being utilised for adjusting a cell bias associated with a small cell supported by that small cell base station, changes in said cell bias changing a user equipment offload to said small cell; and
transmission logic operable to transmit said policy to said at least one small cell base station to be utilised during said reporting of a cell performance indicator; wherein said policy specifies a threshold amount of change from a previously-reported cell performance indicator which, when exceeded, said cell performance indicator is to be reported.

12. A small cell base station method, comprising:

receiving a policy for reporting of a cell performance indicator, said cell performance indicator being utilised for adjusting a cell bias associated with a small cell supported by said small cell base station, changes in said cell bias changing a user equipment offload to said small cell; and
determining, based on said policy, whether to report said cell performance indicator; wherein
said policy specifies a threshold amount of change from a previously-reported cell performance indicator which, when exceeded, said cell performance indicator is to be reported.

13. A small cell base station, comprising:

reception logic operable to receive a policy for reporting of a cell performance indicator, said cell performance indicator being utilised for adjusting a cell bias associated with a small cell supported by said small cell base station, changes in said cell bias changing a user equipment offload to said small cell; and
determining logic operable to determine, based on said policy, whether to report said cell performance indicator; wherein said policy specifies a threshold amount of change from a previously-reported cell performance indicator which, when exceeded, said cell performance indicator is to be reported.

14. A computer program product operable, when executed on a computer, to perform the method steps of any one of claims 1 to 10 or 12.

FIG. 1

$\mathbf{b}^{n+1}$ for UEs in the 1st Pico BS

$\mathbf{b}^{n+1}$ for UEs in the Mth Pico BS

1st Pico BS

$Q_1^n$

$b_1^n$

Bias controller

$b_1^{n+1}$

$\cdots$

Mth Pico BS

$Q_M^n$

$b_M^n$

Bias controller

$b_M^{n+1}$

$Q_0^n$

KPI info channel

$Q_0^n$

Macro BS

$\mathbf{b}^{n+1}$ for UEs in the Macro BS

$\mathbf{b}^{n+1}$

Bias info channel

$$\mathbf{b}^{n+1} = [b_1^{n+1}, \ldots, b_M^{n+1}]$$

EP 2 836 004 A1

FIG. 2

EP 2 836 004 A1

**FIG. 3**

FIG. 4

Cell edge based decentralized bias SON    Fixed bias: 1dB Macro and 2dB Pico in carrier 2, 3dB Pico in carrier 1

Cell edge throughput, bps

Iteration

FIG. 5

Cell edge based decentralized bias SON    Eclo based decentralized bias SON    0dB fixed uniform bias

Cell edge throughput, bps

Iteration

FIG. 6

EP 2 836 004 A1

FIG. 7

Cell edge based decentralized bias SON

Eclo based decentralized bias SON

2dB fixed uniform bias

Cell edge throughput, bps

Iteration

FIG. 8

Cell edge based decentralized bias SON    Eclo based decentralized bias SON    3dB fixed uniform bias

Cell edge throughput, bps

Iteration

FIG. 9

EP 2 836 004 A1

| Small cell | RNC | UE |
|---|---|---|

1.Procedure to pass small cell KPI to RNC

2.Calculate CIO (biasing) of small cell

3. New CIO value

## FIG. 10

| Small cell | RNC | UE |
|---|---|---|

1.KPI policy

2.KPI information

3.Calculate small cell CIO

4.Updated CIO

## FIG. 11

Europäisches
Patentamt

European
Patent Office

Office européen
des brevets

## EUROPEAN SEARCH REPORT

Application Number

EP 13 30 6132

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2013/066241 A1 (ERICSSON TELEFON AB L M [SE]) 10 May 2013 (2013-05-10)<br>* paragraphs [0036], [0038], [0041], [0049], [0057], [0059], [0060], [0061] *<br>* figure 1A *<br>----- | 1-15 | INV.<br>H04W24/10<br>H04W48/06<br>H04W84/04<br>H04W84/06<br>H04W88/08<br>H04W88/12 |
| Y | WO 2009/072941 A1 (ERICSSON TELEFON AB L M [SE]; PUCAR RIMHAGEN ANNA [SE]; WESTERBERG ERI) 11 June 2009 (2009-06-11)<br>* abstract *<br>* page 6, line 27 - page 10, line 21 *<br>* figures 1-4 *<br>----- | 1-15 | |
| Y | GB 2 397 469 A (MOTOROLA INC [US] MOTOROLA INC [US]; MOTOROLA INC [US])<br>21 July 2004 (2004-07-21)<br>* abstract *<br>* page 12, line 24 - page 18, line 15 *<br>* figures 2-4 *<br>----- | 1-15 | |
| | | | TECHNICAL FIELDS SEARCHED (IPC)<br><br>H04W<br>H04L |

The present search report has been drawn up for all claims

| Place of search | Date of completion of the search | Examiner |
|---|---|---|
| Berlin | 19 February 2014 | Bittermann, Jörg |

EPO FORM 1503 03.82 (P04C01)

## ANNEX TO THE EUROPEAN SEARCH REPORT
## ON EUROPEAN PATENT APPLICATION NO.

EP 13 30 6132

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2014

| Patent document cited in search report | | Publication date | Patent family member(s) | Publication date |
|---|---|---|---|---|
| WO 2013066241 | A1 | 10-05-2013 | NONE | |
| WO 2009072941 | A1 | 11-06-2009 | NONE | |
| GB 2397469 | A | 21-07-2004 | NONE | |

EPO FORM P0459

For more details about this annex : see Official Journal of the European Patent Office, No. 12/82